(19) Europäisches Patentamt
European Patent Office
Office européen des brevets

(11) **EP 4 207 369 A1**

(12) **EUROPEAN PATENT APPLICATION**
published in accordance with Art. 153(4) EPC

(43) Date of publication:
**05.07.2023 Bulletin 2023/27**

(21) Application number: **20963897.2**

(22) Date of filing: **02.12.2020**

(51) International Patent Classification (IPC):
**H01M 4/36** (2006.01)   **H01M 10/0525** (2010.01)

(52) Cooperative Patent Classification (CPC):
**Y02E 60/10**

(86) International application number:
**PCT/CN2020/133394**

(87) International publication number:
**WO 2022/116049 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **DU, Changchao
Ningde City, Fujian Province, 352100 (CN)**
• **LI, Jiawen
Ningde City, Fujian Province, 352100 (CN)**

(74) Representative: **Icosa
83 avenue Denfert-Rochereau
75014 Paris (FR)**

(54) **NEGATIVE ELECTRODE PLATE, ELECTROCHEMICAL DEVICE, ELECTRONIC DEVICE, AND PREPARATION METHOD FOR NEGATIVE ELECTRODE PLATE**

(57)    This application provides a negative electrode plate, an electrochemical apparatus, an electronic apparatus, and a preparation method of negative electrode plate. The negative electrode plate includes a current collector and a negative electrode active substance layer disposed on the current collector, where the negative electrode active substance layer includes lithium carboxymethyl cellulose, and porosity of the negative electrode plate is greater than or equal to 33%. In this application, the negative electrode active substance layer includes lithium carboxymethyl cellulose, and the porosity of the negative electrode plate is greater than or equal to 33% so that the porosity of the negative electrode plate can be improved without affecting the compacted density of the negative electrode plate, thereby increasing electrolyte retention of the electrochemical apparatus and improving cycling performance of the electrochemical apparatus.

FIG. 3

Processed by Luminess, 75001 PARIS (FR)

**Description**

**TECHNICAL FIELD**

This application relates to the field of electronic technologies, and in particular, to a negative electrode plate, an electrochemical apparatus, an electronic apparatus, and a preparation method of negative electrode plate.

**BACKGROUND**

Cycling performance of electrochemical apparatuses (such as lithium-ion batteries) is a critical performance of electrochemical apparatuses. A higher cycling capacity retention rate of the electrochemical apparatus brings a better user experience. The cycling capacity retention rate of electrochemical apparatuses can be improved by improving the structural stability of positive and negative electrode materials. In addition, electrolyte retention has great influence on the capacity retention rate at the later stage of cycling. Insufficient electrolyte retention leads to a rapid decrease in the cycling capacity retention rate. Higher electrolyte retention of the electrochemical apparatus brings better cycling performance. However, excessively high electrolyte retention will lead to an electrolyte bulging, affecting the appearance and thickness of the electrochemical apparatus. Therefore, how to improve the electrolyte retention without an electrolyte bulging of electrochemical apparatuses is a challenge to be addressed in electrochemical apparatuses.

**SUMMARY**

Given the foregoing disadvantages in the prior art, some embodiments of this application provide a negative electrode plate. Lithium carboxymethyl cellulose is used to increase porosity of the negative electrode plate without decreasing compacted density of the negative electrode plate.

This application provides a negative electrode plate including a current collector and a negative electrode active substance layer disposed on the current collector, where the negative electrode active substance layer includes lithium carboxymethyl cellulose, a porosity of the negative electrode plate is greater than or equal to 33%.

In some embodiments, a degree of substitution of lithium carboxymethyl cellulose is 0.4 to 0.6.

In some embodiments, a number-average molecular weight of lithium carboxymethyl cellulose is $50 \times 10^4$ to $100 \times 10^4$.

In some embodiments, a viscosity of an aqueous solution containing lithium carboxymethyl cellulose at a mass percentage of 1% is 20000 cP to 50000 cP.

In some embodiments, the negative electrode active substance layer further includes a negative electrode active substance and a binder.

In some embodiments, based on total mass of the negative electrode active substance layer, a mass percentage of lithium carboxymethyl cellulose is 0.2% to 1%.

In some embodiments, the negative electrode active substance includes at least one of artificial graphite, natural graphite, hard carbon, mesocarbon microbeads, silicon oxide, or pure silicon.

In some embodiments, the binder includes a water-soluble binder, and the water-soluble binder includes at least one of styrene-butadiene rubber (SBR), styrene-acrylic polymer, or polyacrylate (PAA).

In some embodiments, based on the total mass of the negative electrode active substance layer, a mass percentage of the negative electrode active substance is 96.5% to 98.6%.

In some embodiments, based on the total mass of the negative electrode active substance layer, a mass percentage of the binder is 0.6% to 2.5%.

In some embodiments, a coating weight of the negative electrode active substance layer is 5.2 mg/cm$^2$ to 11.7 mg/cm$^2$.

In some embodiments, a compacted density of the negative electrode active substance layer is 1.40 g/cm$^3$ to 1.80 g/cm$^3$.

In some embodiments, a thickness of the negative electrode plate is 50 $\mu$m to 200 $\mu$m, and a resistivity thereof is 0.001 $\Omega$.cm to 1000 $\Omega$.cm.

In some embodiments, a peel strength between the negative electrode active substance layer of the negative electrode plate and the current collector is greater than 10 N/m.

This application further provides an electrochemical apparatus including the negative electrode plate according to any one of the foregoing embodiments.

This application further provides an electronic apparatus including the electrochemical apparatus.

This application further provides a preparation method of a negative electrode plate in an electrochemical apparatus, including: adding lithium carboxymethyl cellulose into water, followed by mixing, to obtain a first solution; mixing the first solution, graphite, a binder, and water to obtain a negative electrode slurry; and applying the negative electrode slurry onto a current collector, followed by drying, to obtain a negative electrode plate. In some embodiments, lithium carboxymethyl cellulose satisfies the properties discussed above. In some embodiments, water is deionized water. In some embodiments, the binder may include at least one of styrene-butadiene rubber (SBR), styrene-acrylic polymer, or polyacrylate (PAA). In some embodiments, a mass ratio of the graphite, lithium carboxymethyl cellulose, and binder used may be (96.5-98.6):(0.2-1):(0.6-2.5).

In this application, the negative electrode active substance layer includes lithium carboxymethyl cellulose, and the porosity of the negative electrode plate is set greater than or equal to 33%, so that the porosity of the negative electrode plate can be improved without affecting the compacted density of the negative electrode plate, thereby increasing the electrolyte retention of the electrochemical apparatus and improving the cycling performance of the electrochemical apparatus.

**BRIEF DESCRIPTION OF DRAWINGS**

FIG. 1 is a schematic diagram of a negative electrode plate according to some embodiments of this application.
FIG. 2 is a schematic diagram of an electrode assembly of an electrochemical apparatus according to some embodiments of this application.
FIG. 3 is a comparative diagram of cycling capacity retention rates of Example 4 and Comparative Example 3 in this application.

**DETAILED DESCRIPTION**

The following embodiments may help persons skilled in the art to understand this application more comprehensively, but do not limit this application in any manner.

Generally, the porosity of an electrode plate is improved by reducing the compacted density of the electrode plate, so as to increase electrolyte retention of an electrochemical apparatus, thereby improving cycling performance of the electrochemical apparatus. However, in a case that the compacted density is reduced, the volumetric energy density of the electrochemical apparatus is reduced. How the porosity of the electrode plate is increased without affecting the compacted density has become a critical issue.

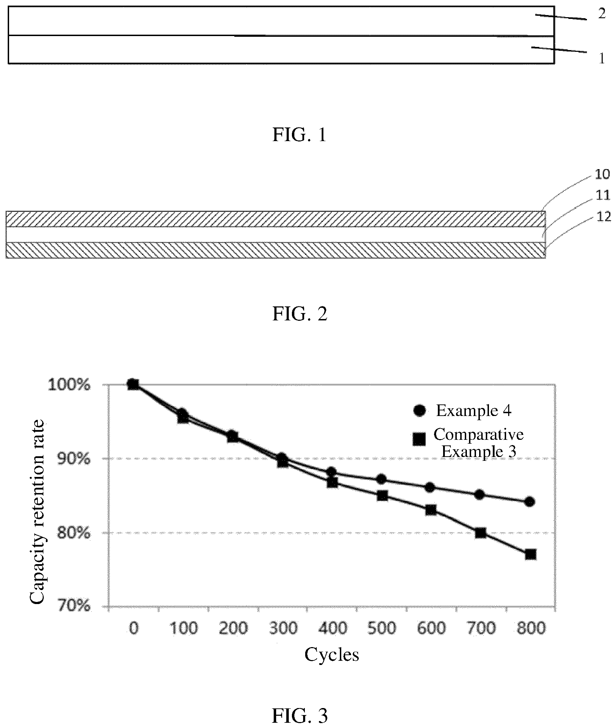

As shown in FIG. 1, some embodiments of this application provide a negative electrode plate, and the negative electrode plate includes a current collector 1 and a negative electrode active substance layer 2. The negative electrode active substance layer 2 is disposed on the current collector 1. It should be understood that, although the negative electrode active substance layer 2 is provided on one side of the current collector 1 in FIG. 1, this is merely an example, and the negative electrode active substance layer 2 may be provided on both sides of the current collector 1. In some embodiments, the current collector 1 of the negative electrode plate may include at least one of copper foil, aluminum foil, nickel foil, or a carbon-based current collector.

In some embodiments, the negative electrode active substance layer 2 includes lithium carboxymethyl cellulose (CMC-Li), and the porosity of the negative electrode plate is greater than or equal to 33%. The use of lithium carboxymethyl cellulose can make it easier for the gas-liquid interface to exist in the solid-liquid interface during slurry preparation of the negative electrode active substance layer. Due to the existence of the solid-gas-liquid interface in the slurry, the porosity of the dried negative electrode plate can be increased to 33% or above. The increased porosity of the negative electrode plate can increase the electrolyte retention of the electrochemical apparatus, which in turn increases the cycling capacity retention rate of the electrochemical apparatus, especially the capacity retention rate at the later stage of cycling. In addition, the increase of porosity in this application does not decrease the compacted density of the negative electrode plate, so that the compacted density of the negative electrode plate and the volume energy density of the electrochemical apparatus are not affected.

In some embodiments, a degree of substitution of lithium carboxymethyl cellulose (the number of lithium carboxymethyl cellulose groups attached to each cellulose unit) is 0.4 to 0.6. As compared to lithium carboxymethyl cellulose with a degree of substitution greater than 0.6, and less than or equal to 1.5, lithium carboxymethyl cellulose with a degree of substitution of 0.4 to 0.6 can increase the porosity of the negative electrode plate. In a process of mixing the slurry of negative electrode active substance layer, a gas-liquid interface is more likely to exist in the solid-liquid interface between lithium carboxymethyl cellulose with s degree of substitution of 0.4 to 0.6 and the negative electrode active substance (such as graphite). Due to the existence of many solid-gas-liquid interfaces, or negative electrode active substance-air-lithium carboxymethyl cellulose interfaces, in the slurry the porosity of the dried negative electrode plate can be increased, thereby increasing the electrolyte retention of the electrochemical apparatus and improving the capacity retention rate at later stage of cycling. In addition, when the degree of substitution of lithium carboxymethyl cellulose is greater than 0.6, the porosity of the negative electrode plate decreases; when the degree of substitution is less than 0.4, the porosity of the negative electrode plate also decreases, and the proportion of carboxymethyl lithium groups ($-CH_2COOLi$) in lithium carboxymethyl cellulose is excessively low, leading to a lower dynamic performance of the negative electrode plate.

In some embodiments, a number-average molecular weight of lithium carboxymethyl cellulose is $50 \times 10^4$ to $100 \times 10^4$. In some embodiments, viscosity of an aqueous solution containing lithium carboxymethyl cellulose at a mass percentage of 1% is 20000 cP to 50000 cP.

In some embodiments, apart from using lithium carboxymethyl cellulose with a low degree of substitution (0.4 to 0.6) or a high molecular amount, other manners can also be used for improving the porosity of the negative electrode plate. For example, the negative electrode active substance layer can be added with conductive carbon black, vapor grown carbon fibers (VGCF), and/or carbon nanotubes (CNT) to improve the porosity of the negative electrode plate.

In some embodiments, the negative electrode active substance layer further includes a negative electrode active substance and a binder. In some embodiments, the negative electrode active substance includes at least one of artificial graphite, natural graphite, hard carbon, mesocarbon microbeads, silicon oxide, or pure silicon. In some embodiments, the binder may include a water-soluble binder, and the water-soluble binder may include at least one of styrene-butadiene rubber (SBR), styrene-acrylic polymer, or polyacrylate (PAA).

In some embodiments, based on total mass of the negative electrode active substance layer, mass percentage of lithium carboxymethyl cellulose is 0.2% to 1%. In some embodiments, within this range of mass percentage, increasing the proportion of lithium carboxymethyl cellulose in the negative electrode active substance layer is beneficial for increasing the porosity of the negative electrode plate and improving the electrolyte retention and cycling performance of the electrochemical apparatus. If the proportion of lithium carboxymethyl cellulose is excessively high, it is not conducive to stirring in slurry preparation, thus increasing the difficulty of preparation. If the proportion of lithium carboxymethyl cellulose is excessively low, it is not conducive to the dispersion of slurry, even causing solid-liquid separation.

In some embodiments, based on the total mass of the negative electrode active substance layer, mass percentage of the negative electrode active substance is 96.5% to 98.6%. In some embodiments, based on the total mass of the negative electrode active substance layer, the mass percentage of the binder is 0.6% to 2.5%. If the proportion of the binder is excessively high, volumetric energy density will suffer a loss; if the proportion of the binder is excessively low, it is not conducive to the bonding between materials.

In some embodiments, thickness of the negative electrode plate is 50 $\mu$m to 200 $\mu$m, and resistivity thereof is 0.001 $\Omega$.cm to 1000 $\Omega$.cm.

In some embodiments, coating weight of the negative electrode active substance layer is 5.2 mg/cm$^2$ to 11.7 mg/cm$^2$. If the coating weight is excessively small, for example, less than 5.2 mg/cm$^2$, the proportion of the negative electrode active substance layer is excessively small, which is not beneficial for improving the energy density of the electrochemical apparatus. If the coating weight is excessively large, for example, greater than 11.7 mg/cm$^2$, the negative electrode active substance layer is excessively thick, making it difficult for lithium ions to intercalate into the negative electrode active substance layer close to the current collector.

In some embodiments, compacted density of the negative electrode active substance layer is 1.40 g/cm$^3$ to 1.80 g/cm$^3$. It should be understood that the compacted density refers to the compacted density of a negative electrode active substance layer that is applied on one side. If the compacted density is excessively high, it is not conducive to the formation of pores in the negative electrode active substance layer. If the compacted density is excessively low, it is not conducive to the improvement of energy density of the electrochemical apparatus.

In some embodiments, a peel strength between the negative electrode active substance layer of the negative electrode plate and the current collector is greater than 10 N/m. If the peel strength between the negative electrode active substance layer and the current collector is excessively low, the negative electrode active substance layer is easy to fall off the current collector. It should be understood that these are merely examples and other appropriate thicknesses, compacted densities, resistivities, and peel strengths may be used.

As shown in FIG. 2, some embodiments of this application provide an electrochemical apparatus, and the electrochemical apparatus includes a positive electrode plate 10, a negative electrode plate 12, and a separator 11 disposed between the positive electrode plate 10 and the negative electrode plate 12. The positive electrode plate 10 may include a positive electrode current collector and a positive electrode active substance layer applied on the positive electrode current collector. In some embodiments, the positive electrode plate 10 has the positive electrode active substance layer, and the positive electrode active substance layer may be applied to only part of the positive electrode current collector. The positive electrode active substance layer may include a positive electrode active substance, a conductive agent, and a binder. The positive electrode current collector may be Al foil or another positive electrode current collector commonly used in the art. The conductive agent in the positive electrode plate may include at least one of conductive carbon black, laminated graphite, graphene, or carbon nanotubes. The binder in the positive electrode plate may include at least one of polyvinylidene fluoride, vinylidene fluoride-hexafluoropropylene copolymer, styrene-acrylate copolymer, styrene-butadiene copolymer, polyamide, polyacrylonitrile, polyacrylate, polyacrylic acid, polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. The positive electrode active substance includes but is not limited to lithium cobalt oxide, lithium nickel oxide, lithium manganate oxide, lithium nickel manganese oxide, lithium nickel cobalt oxide, lithium iron phosphate, lithium nickel cobalt aluminate, or lithium nickel cobalt manganese oxide. The above positive electrode active substance may include a positive electrode active substance that has been doped or coated.

In some embodiments, the separator 11 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. In particular, polyethylene and polypropylene can well prevent short circuits and can improve the stability of the battery through a shutdown effect.

In some embodiments, the surface of the separator may further include a porous layer. The porous layer is disposed on at least one surface of a substrate of the separator. The porous layer includes inorganic particles and the binder. The inorganic particles include at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconia oxide ($ZrO_2$), yttrium oxide ($Y_2O_3$), silicon carbide (SiC), boehmite, aluminum hydroxide, magnesium hydroxide, calcium hydroxide, or barium sulfate. The binder includes at least one of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, enhancing adhesion between the separator and the electrode plate.

In some embodiments, the negative electrode plate 12 may be the foregoing negative electrode plate.

In some embodiments of this application, an electrode assembly of the electrochemical apparatus is a wound electrode assembly or a stacked electrode assembly.

In some embodiments, the electrochemical apparatus includes a lithium-ion battery. However, this application is not limited thereto. In some embodiments, the electrochemical apparatus may further include an electrolyte. The electrolyte may be one or more of gel electrolyte, solid electrolyte, and liquid electrolyte, and the liquid electrolyte includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ is selected as the lithium salt because it can provide high ionic conductivity and improve cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

Examples of the linear carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (MEC), and combinations thereof. Examples of the cyclic carbonate compound are ethylene carbonate (EC), propylene carbonate (PC), butylene carbonate (BC), vinyl ethylene carbonate (VEC), and combinations thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, and combinations thereof.

Examples of the carboxylate compound are methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, and combinations thereof.

Examples of the ether compound are dibutyl ether, tetraglyme, diglyme, 1,2-dimethoxyethane, 1,2-diethoxyethane, ethoxymethoxy ethane, 2-methyltetrahydrofuran, tetrahydrofuran, and combinations thereof.

Examples of the another organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and combinations thereof.

In some embodiments of this application, lithium-ion batteries are used as examples. A positive electrode plate, a separator, and a negative electrode plate are wound or stacked in sequence to form an electrode assembly, and the electrode assembly is then packaged in an aluminum-plastic film, followed by injection of electrolyte, formation, and sealing so that a lithium-ion battery is prepared. Then, a performance test and a cycling test are performed on the prepared lithium-ion batteries.

Those skilled in the art will understand that the preparation method of electrochemical apparatus (for example, lithium-ion battery) described above is merely an embodiment. Without departing from the content disclosed in this application, other methods commonly used in the art may be used.

Some embodiments of this application further provide an electronic apparatus including the foregoing electrochemical apparatus. The electronic apparatus in some embodiments of this application is not particularly limited and may be any known electronic apparatus used in the prior art. In some embodiments, the electrochemical apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

Some specific examples and comparative examples are listed below to better illustrate this application. Lithium-ion batteries are used for illustration.

In the following Examples 1 to 13 and Comparative Examples 1 to 3, lithium-ion batteries are used as an example, and the raw materials for preparing the lithium-ion batteries, raw material ratios, preparation method, and the like are only examples. This application is not limited to the raw materials, raw material ratios, and preparation methods in the following examples.

Example 1

Preparation of positive electrode plate: Positive active substance $LiCoO_2$, conductive carbon black, and binder polyvinylidene fluoride (PVDF) were fully stirred and mixed in an N-methylpyrrolidone solvent system at a mass ratio of 96.7:1.7:1.6, and then the resulting mixture was applied onto an aluminum foil, followed by drying and cold pressing, to obtain a positive electrode plate.

Preparation of negative electrode plate: Negative electrode active substance graphite, lithium carboxymethyl cellulose (with a degree of substitution of 0.4), and binder styrene-butadiene rubber (SBR) were mixed in the deionized water solvent system at a mass ratio of 98:1:1 to obtain a negative electrode slurry, and then the negative electrode slurry was applied onto a copper foil to form a negative electrode active substance layer, followed by drying and cold pressing the coated copper foil, to obtain a negative electrode plate. The loading amount of the negative electrode active substance layer on the negative electrode plate was 8.3 mg/cm$^2$.

Preparation of lithium-ion battery: A polyethylene porous polymer film was used as a separator, and the positive electrode plate, the separator, and the negative electrode plate were stacked in sequence so that the separator was disposed between the positive electrode plate and the negative electrode plate for separation, and winding was performed to obtain an electrode assembly. The electrode assembly was placed in an outer package aluminum-plastic film, an electrolyte containing ethylene carbonate (EC) and propylene carbonate (PC) was injected, and sealing was performed, followed by processes such as formation, degassing, and trimming, to obtain a lithium-ion battery.

In Examples 2 to 16 and Comparative Examples 1 to 5, corresponding lithium-ion batteries were obtained through the same preparation steps. Differences in parameter settings and resultant performance parameters of Examples 1 to 16 and Comparative Examples 1 to 5 are shown in Table 1 and Table 2.

Some test methods of the parameters are described as follows:

Test method of porosity of electrode plate:

Test instrument: microactive Autopore V9600 mercury porosimeter.

Analysis steps:

1. Sample preparation: An electrode plate was cut into 2 cm × 30 cm strips, and the sample is rolled into rolls along the length direction and weighed as m1. The electrode plate was placed into a dilatometer, sealing grease was applied to the opening of the dilatometer, and the dilatometer was moved into the porosimeter. The dilatometer for the sample needs to be evacuated before being filled with mercury.

2. The dilatometer was fitted with the protection ring and inserted into the low-pressure section, and the low-pressure section was tightened clockwise while the dilatometer was being pressed, the protection sleeve and capacitance sensor were placed at the right positions, and then low-pressure analysis was made using test software.

3. The dilatometer was put into the high-pressure chamber, and the high-pressure section was screwed; high pressure oil was added to the top of the pressure relief valve, and the high-pressure section was unscrewed and screwed several times with small amplitude to let the high pressure oil discharge bubbles in the high pressure section until there are no big bubbles; and high-pressure analysis was made using test software.

4. The porosity of the electrode plate was calculated by the software.

Ion resistance test:

A four-wire two-end method was used to determine a fixed resistance by measuring a voltage between two ends of the resistor under test and a current flowing through it. A specified amount of powder was added into a test mold, followed by shaking to flat, and a gasket of the mold was put onto the sample; when the sample was loaded, the mold was put onto a surface of a workbench of an electronic pressure testing machine, risen to 500 kg (159 MPa) at a speed of 5 mm/min, followed by 60s of constant pressure, and released to 0; and when the constant pressure is at 5000 $\pm$ 2 kg (15s to 25s after the pressure risen to 5000 kg), a sample pressure was recorded, a deformation height of the sample is fetched, and a displayed value of a resistance tester at this time is recorded.

Measurement method of CMC viscosity (GB 1904-2005):

Test instruments:

1. Viscometer: Brookfield type or equivalent
2. Container: glass bottle, with a diameter of approximately 64 mm, a depth of 152 mm, non-contracting at the top (same diameter at the top and bottom), and a capacity of 340 mL.
3. Thermostat water bath
4. Mechanical stirring machine: made of stainless steel or glass, connected to a variable-speed motor that can rotate at 900 r/min $\pm$ 100 r/min under different loads.

Analysis steps:

2.4 g sample dried at 105°C $\pm$ 2°C for 2 h (prepare test solution with 1% concentration by mass), accurate to 1 mg, was weighed. 237.6 mL of water was added into the glass (to prepare a test solution with a mass percentage of 1%), the stirrer was put into the glass, with the stirring blade about 10 mm away from the bottom of the glass, stirring was started, and the sample was slowly added. The stirring speed was adjusted to 900 r/min $\pm$ 100 r/min, followed by 2 hours of stirring. If the sample was not fully dissolved, stirring was performed for another 0.5 h. The stirrer was removed, and the glass was placed into the thermostat water bath at a constant temperature of 25°C $\pm$ 2°C for 1 h. The glass was taken out, the solvent was manually stirred for 10s, and the viscosity was measured using the viscometer.

Test method of the degree of substitution of lithium carboxymethyl cellulose (GB 1904-2005):

Test instruments:

1. Sintered-glass filter crucible: with a filter plate pore size of 15 $\mu$m to 40 $\mu$m.
2. Evaporating dish: 20 mL to 25 mL.

Analysis steps:

About 1.5 g of lithium carboxymethyl cellulose sample with a resolution of 0.0002 g was weighed, put into the sintered-glass filter crucible, and washed several times with the ethanol solution preheated to 50°C to 70°C (filling the sintered-glass filter crucible each time) until the filtrate turned brick red after 1 drop of potassium chromate solution and 1 drop of silver nitrate solution were added. Otherwise, the washing should be continued, typically five times. The sample was washed with anhydrous ethanol at the last time, the washed sample was moved into the flat weighing bottle, and dried at 120°C $\pm$ 2°C for 2 hours (after about 1 hour, the sample in the weighing bottle was tapped gently). The weighing bottle was capped and moved into the drier and cooled to room temperature. About 1 g of the sample, accurate to 0.2 mg, was weighed, put in the evaporating dish, and carbonized on an electric furnace until no smoke was produced. The sample was put in a high-temperature furnace at 300°C, and the furnace was heated to 700°C $\pm$ 25°C, kept for 15 min, powered off, and then cooled to below 200°C. Then the sample was moved into a 250 mL beaker, added with 100 mL of water and 50 mL $\pm$ 0.05 mL of sulfuric acid standard titration solution. The beaker was heated over the electric furnace, leaving the solution to be slowly boiled for 10 min. Then 2 or 3 drops of methyl red indicator solution were added, followed by cooling, and the sample was titrated with sodium hydroxide standard titration solution until the red color just faded.

The degree of substitution ($X_{D.S}$) was calculated according to the following formulas:

$$C_B = (V_1 C_1 - V_2 C_2)/m$$

$$X_{D.S} = 0.162\, C_B/(1 - 0.080\, C_B)$$

In the formulas:

$C_B$ - number of millimoles of carboxymethyl contained per gram of sample, in millimoles per gram ($10^{-2}$ mol/g);

$V_1$ - volume of the standard titration solution of sulfuric acid, in milliliters (ml);

$C_1$ - accurate concentration of the sulfuric acid standard titration solution, in mol/L;

$V_2$ - volume of the standard titration solution of sodium hydroxide, in milliliters (ml);

$C_2$ - accurate concentration of the standard titration solution of sodium hydroxide, in mol/L;

m - mass of the sample, in grams (g);

0.162 - millimolar mass of one glucose unit in cellulose, in grams per millimole (g/$10^{-3}$ mol); and

0.080 - millimolar mass of sodium carboxymethyl group, in grams per millimole (g/$10^{-3}$ mol).

The arithmetic average of two parallel determination results is taken as the determination result, and an absolute difference between the two parallel determination results is not greater than 0.02.

Temperature rise test:

At a test temperature of 25°C, the battery was charged to 4.4 V at a constant current of 0.7C, constant-voltage charged to 0.025C, left standing for 5 minutes, and discharged to 3.0 V at 8C. The temperatures before and after the discharge were recorded, and a difference therebetween was the temperature rise.

Cycling performance test for lithium-ion battery:

At a test temperature of 25°C, the battery was charged to 4.4 V at a constant current of 0.7C, constant-voltage charged to 0.025C, left standing for 5 minutes, and then discharged to 3.0 V at 0.5C. A capacity obtained in this step was the initial capacity. Then, a 0.7C charge and 0.5C discharge cycling test was performed. A ratio of the capacity obtained at the 800th cycle to the initial capacity was calculated to obtain the capacity retention rate after 800 cycles.

**Table 1**

| | Material type of lithium carboxymethyl cellulose | Porosity of negative electrode plate after cold pressing | Electrolyte absorption ($\mu$g/1540.25 mm$^2$) | Capacity retention rate after 800 cycles at 25°C |
|---|---|---|---|---|
| Example 1 | CMC-Li | 33% | 39.5 | 83% |
| Example 2 | CMC-Li | 40% | 44.2 | 85% |
| Example 3 | CMC-Li | 50% | 48.4 | 89% |
| Comparative Example 1 | CMC-Na | 40% | 41.7 | 83% |
| Comparative Example 2 | CMC-Li | 32% | 36.0 | 80% |

It can be learned from a comparison between Comparative Example 2 and Examples 1 to 3 that with the increase of porosity of the negative electrode plate, the electrolyte absorption also increases, and the cycling capacity retention rate of the electrochemical device increases.

It can be learned from a comparison between Example 2 and Comparative Example 1 that lithium carboxymethyl cellulose is used in Example 2 and sodium carboxymethyl cellulose is used in Comparative Example 1, and negative electrode plates with the same porosity of 40% are obtained. However, both the electrolyte absorption and the cycle capacity retention rate of the electrochemical device are better in Example 2 than in Comparative Example 1.

**Table 2**

| Example | Degree of substitution | Number-average molecular weight | Viscosity (cP) | Material type of lithium carboxymethyl cellulose | Mass percentage of lithium carboxymethyl cellulose in negative electrode active substance layer | Negative electrode active substance and mass percentage | Binder and mass percentage | Porosity of negative electrode plate after cold pressing | Ion resistance (mΩ) | Electrolyte absorption (μg/1540.25 mm²) | 8C discharge temperature rise at 25°C | Capacity retention rate after 800 cycles at 25°C |
|---|---|---|---|---|---|---|---|---|---|---|---|---|
| 4 | 0.4 | $70 \times 10^4$ | 35000 | CMC-Li | 1.0% | 98.0% graphite | 1.0% SBR | 39% | 9 | 43.1 | 23 | 84% |
| 5 | 0.5 | $70 \times 10^4$ | 32000 | CMC-Li | 1.0% | 98.0% graphite | 1.0% SBR | 38% | 10 | 42.0 | 24 | 83% |
| 6 | 0.6 | $70 \times 10^4$ | 30000 | CMC-Li | 1.0% | 98.0% graphite | 1.0% SBR | 37% | 10 | 40.9 | 25 | 83% |
| 7 | 0.6 | $50 \times 10^4$ | 35000 | CMC-Li | 0.6% | 98.4% graphite | 1.0% SBR | 39% | 9 | 43.1 | 24 | 84% |
| 8 | 0.6 | $70 \times 10^4$ | 40000 | CMC-Li | 0.6% | 98.5% graphite | 1.0% SBR | 39% | 9 | 43.1 | 23 | 84% |
| 9 | 0.6 | $100 \times 10^4$ | 45000 | CMC-Li | 0.6% | 98.6% graphite | 1.0% SBR | 39% | 9 | 43.1 | 22 | 84% |
| 10 | 0.4 | $100 \times 10^4$ | 35000 | CMC-Li | 0.2% | 98.8% graphite | 1.0% SBR | 36% | 12 | 39.8 | 20 | 82% |
| 11 | 0.4 | $100 \times 10^4$ | 35000 | CMC-Li | 0.6% | 98.4% graphite | 1.0% SBR | 40% | 8 | 44.2 | 22 | 85% |
| 12 | 0.4 | $100 \times 10^4$ | 35000 | CMC-Li | 1.0% | 98.0% graphite | 1.0% SBR | 43% | 8 | 47.5 | 25 | 88% |

| Example | Degree of substitution | Number-average molecular weight | Viscosity (cP) | Material type of lithium carboxymethyl cellulose | Mass percentage of lithium carboxymethyl cellulose in negative electrode active substance layer | Negative electrode active substance and mass percentage | Binder and mass percentage | Porosity of negative electrode plate after cold pressing | Ion resistance (mΩ) | Electrolyte absorption (µg/1540.25 mm²) | 8C discharge temperature rise at 25°C | Capacity retention rate after 800 cycles at 25°C |
|---|---|---|---|---|---|---|---|---|---|---|---|---|
| 13 | 0.5 | $70 \times 10^4$ | 32000 | CMC-Li | 1.0% | 97.8% graphite | 1.2% PAA | 38% | 10 | 42.0 | 27 | 83% |
| 14 | 0.5 | $70 \times 10^4$ | 32000 | CMC-Li | 0.6% | 98.4% graphite | 1.0% styrene-acrylic emulsion | 39% | 9 | 43.1 | 22 | 83% |
| 15 | 0.6 | $70 \times 10^4$ | 30000 | CMC-Li | 1.0% | 97.7% hard carbon | 1.3% SBR | 36% | 8 | 39.8 | 24 | 82% |
| 16 | 0.6 | $70 \times 10^4$ | 30000 | CMC-Li | 1.0% | 96.5% silicon | 2.5% SBR | 38% | 9 | 42.0 | 27 | 83% |
| Comparative Example | | | | | | | | | | | | |
| 3 | 0.7 | $70 \times 10^4$ | 25000 | CMC-Li | 1.2% | 97.8% graphite | 1.0% SBR | 30% | 15 | 33.1 | 30 | 77% |
| 4 | 0.3 | $50 \times 10^4$ | 32000 | CMC-Li | 0.6% | 98.4% graphite | 1.0% SBR | 31% | 14 | 34.2 | 29 | 77% |
| 5 | 0.9 | $100 \times 10^4$ | 16000 | CMC-Na | 1.2% | 97.8% graphite | 1.0% SBR | 30% | 15 | 33.1 | 30 | 77% |

It can be learned from a comparison between Examples 4 to 16 and Comparative Examples 3 to 5 that when the porosity of the negative electrode plate is controlled above 33% by using lithium carboxymethyl cellulose, the electrolyte absorption is increased, and the cycling capacity retention rate after 800 cycles is increased so that the cycling performance of the electrochemical apparatus is improved. FIG. 3 is a comparative diagram of cycling capacity retention rates of Example 4 and Comparative Example 3 in this application. As shown in FIG. 3, as the number of cycles increases, the difference between the cycle capacity retention rates of the lithium-ion batteries of Example 4 and Comparative Example 3 becomes greater. In addition, when the porosity of the negative electrode plates is controlled above 33% by using lithium carboxymethyl cellulose, the ionic resistances in Examples 4 to 16 are significantly lower than those in Comparative Examples 3 to 5, and the temperature rise of 8C discharge at 25°C also significantly decreases, indicating that the ionic conductivity of the negative electrode plates in Examples 4 to 16 is higher.

It can be learned from a comparison between Examples 4 to 6 that when the degree of substitution of lithium carboxymethyl cellulose is in the range of 0.4 to 0.6, as the degree of substitution of lithium carboxymethyl cellulose increases, the viscosity of lithium carboxymethyl cellulose decreases, the porosity of the negative electrode plate tends to decrease, the electrolyte absorption tends to decrease, and the cycle capacity retention rate after 800 cycles decreases slightly. Therefore, when the degree of substitution of lithium carboxymethyl cellulose is in the range of 0.4 to 0.6, reducing the degree of substitution helps to improve the porosity of the negative electrode plate, increase the electrolyte absorption, and improve the cycling capacity retention rate of the electrochemical apparatus.

It can be learned from a comparison between Examples 7 to 9 that as the number-average molecular weight of lithium carboxymethyl cellulose increases, the viscosity of lithium carboxymethyl cellulose increases correspondingly, but the change in the number-average molecular weight of lithium carboxymethyl cellulose has almost no influence on the porosity of the negative electrode plate, the electrolyte absorption, and the cycling capacity retention rate.

It can be learned from a comparison between Examples 10 to 12 that when the mass percentage of lithium carboxymethyl cellulose in the negative electrode active substance layer is in the range of 0.2% to 1%, as the proportion of lithium carboxymethyl cellulose increases, the porosity of the negative electrode plate increases, the electrolyte absorption also increases, and the cycling capacity retention rate of the electrochemical apparatus also increases. Therefore, when the mass percentage of lithium carboxymethyl cellulose in the negative electrode active substance layer is in the range of 0.2% to 1%, increasing the proportion of lithium carboxymethyl cellulose helps to improve the porosity of the negative electrode plate, increase the electrolyte absorption, and improve the cycling performance of the electrochemical apparatus.

It can be learned from a comparison between Examples 13 and 14 that different materials of the binder in the negative electrode active substance layer have some influence on the porosity of the negative electrode plate and the electrolyte absorption, but have almost no influence on the cycling capacity retention rate of the electrochemical apparatus.

It can be learned from a comparison between Examples 15 and 16 that materials in the negative electrode active substance layer and their proportions affect the porosity of the negative electrode plate, electrolyte absorption, and cycling capacity retention rate.

The foregoing descriptions are only preferred examples of this application and explanations of the applied technical principles. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics. For example, a technical solution formed by replacement between the foregoing characteristics and technical characteristics having similar functions disclosed in this application.

**Claims**

1. A negative electrode plate, comprising:

   a current collector; and
   a negative electrode active substance layer disposed on the current collector, wherein the negative electrode active substance layer comprises lithium carboxymethyl cellulose, and a porosity of the negative electrode plate is greater than or equal to 33%.

2. The negative electrode plate according to claim 1, wherein a degree of substitution of the lithium carboxymethyl cellulose is 0.4 to 0.6.

3. The negative electrode plate according to claim 1, wherein a number-average molecular weight of the lithium carboxymethyl cellulose is $50 \times 10^4$ to $100 \times 10^4$.

**4.** The negative electrode plate according to claim 1, wherein a viscosity of an aqueous solution containing the lithium carboxymethyl cellulose at a mass percentage of 1% is 20000 cP to 50000 cP.

**5.** The negative electrode plate according to claim 1, wherein based on a total mass of the negative electrode active substance layer, a mass percentage of the lithium carboxymethyl cellulose is 0.2% to 1%.

**6.** The negative electrode plate according to claim 1, wherein the negative electrode active substance layer further comprises a negative electrode active substance and a binder.

**7.** The negative electrode plate according to claim 6, wherein the negative electrode plate satisfies at least one of the following conditions:

the electrode active substance comprises at least one of artificial graphite, natural graphite, hard carbon, mesocarbon microbeads, silicon oxide, or pure silicon; and the binder comprises a water-soluble binder, wherein the water-soluble binder comprises at least one of styrene-butadiene rubber (SBR), styrene-acrylic polymer, or polyacrylate (PAA); and
based on the total mass of the negative electrode active substance layer, a mass percentage of the negative electrode active substance is 96.5% to 98.6%; and based on the total mass of the negative electrode active substance layer, a mass percentage of the binder is 0.6% to 2.5%.

**8.** The negative electrode plate according to claim 1, wherein a coating weight of the negative electrode active substance layer is 5.2 mg/cm$^2$ to 11.7 mg/cm$^2$; and/or
a compacted density of the negative electrode active substance layer is 1.40 g/cm$^3$ to 1.80 g/cm$^3$.

**9.** An electrochemical apparatus, comprising the negative electrode plate according to any one of claims 1 to 8.

**10.** An electronic apparatus, comprising the electrochemical apparatus according to claim 9.

**17.** A method for preparing the negative electrode plate of claim 1, the method comprising:

adding lithium carboxymethyl cellulose according to any one of claims 1 to 8 into water, followed by mixing, to obtain a first solution;
mixing the first solution, graphite, binder, and water to obtain a negative electrode slurry; and
applying the negative electrode slurry onto a current collector, followed by drying, to obtain a negative electrode plate.

**18.** The method according to claim 11, wherein a mass ratio of the graphite, lithium carboxymethyl cellulose, and binder in the negative electrode slurry is (96.5-98.6):(0.2-1):(0.6-2.5).

FIG. 1

FIG. 2

FIG. 3

## INTERNATIONAL SEARCH REPORT

| International application No. |
| --- |
| **PCT/CN2020/133394** |

**A. CLASSIFICATION OF SUBJECT MATTER**

H01M 4/36(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 负极, 极片, 羧甲基纤维素锂, 孔隙率, 空隙率, anode, plate, sheet, CMC-Li, porosity

**C. DOCUMENTS CONSIDERED TO BE RELEVANT**

| Category* | Citation of document, with indication, where appropriate, of the relevant passages | Relevant to claim No. |
| --- | --- | --- |
| X | CN 111384370 A (AMPRIUS NANJING CO., LTD.) 07 July 2020 (2020-07-07) description paragraphs 8-64, 107 | 1, 3-12 |
| Y | CN 111384370 A (AMPRIUS NANJING CO., LTD.) 07 July 2020 (2020-07-07) description paragraphs 8-64, 107 | 2, |
| Y | CN 111900357 A (ZHUHAI COSMX BATTERY CO., LTD.) 06 November 2020 (2020-11-06) description, paragraphs 7-29 | 2, |
| Y | CN 110197894 A (NINGDE AMPEREX TECHNOLOGY LTD.) 03 September 2019 (2019-09-03) description, paragraphs 6-16 | 2, |
| A | CN 109659564 A (ZHUHAI COSLIGHT BATTERY CO., LTD.) 19 April 2019 (2019-04-19) entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 August 2021** | **01 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/133394**

| Patent document cited in search report | | | Publication date (day/month/year) | Patent family member(s) | | | Publication date (day/month/year) |
|---|---|---|---|---|---|---|---|
| CN | 111384370 | A | 07 July 2020 | None | | | |
| CN | 111900357 | A | 06 November 2020 | None | | | |
| CN | 110197894 | A | 03 September 2019 | US | 2019267609 | A1 | 29 August 2019 |
| CN | 109659564 | A | 19 April 2019 | WO | 2020134765 | A1 | 02 July 2020 |

Form PCT/ISA/210 (patent family annex) (January 2015)